# EUROPEAN PATENT APPLICATION

(11) **EP 4 641 208 A1**
(43) Date of publication of application: **29.10.2025**
(21) Application number: 23906717.6
(22) Date of filing: 05.12.2023
(51) Int. Cl.: G01N 35/00

(54) **AUTOMATIC ANALYSIS DEVICE**

(30) Priority: 23.12.2022 JP 2022206622
(71) Applicant: HITACHI HIGH-TECH CORPORATION, Tokyo 105-6409 (JP)
(72) Inventor: ONO Shohei, Tokyo 105-6409 (JP); TANAKA Yuto, Tokyo 105-6409 (JP); ZHOU Guangbin, Tokyo 105-6409 (JP); KIYOKAWA Akinori, Tokyo 105-6409 (JP)
(74) Representative: Strehl & Partner mbB
(86) International application number: PCT/JP2023/043533
(87) International publication number: WO 2024/135351

(57) **Abstract**

Provided is an automatic analyzer that prevents flicker and conforms to standards for medical electrical devices. The automatic analyzer includes: a constant-temperature bath configured to store constant-temperature water that maintains a mixed liquid of a specimen and a reagent in a reaction container at a predetermined temperature; a heater configured to heat the constant-temperature water; and a control unit configured to control the heater. a and b have fixed lengths and a < b, where a (ms) is a pulse width of an ON signal that is a control signal for turning the heater ON, and b (ms) is a pulse width of an OFF signal that is a control signal for turning the heater OFF.

## Description

### Technical Field

The present invention relates to an automatic analyzer.

### Background Art

In an automatic analyzer that performs qualitative and quantitative analysis on a predetermined component contained in a sample (specimen) such as blood, it is required to react the sample and a reagent under the same condition in order to ensure reproducibility of the analysis, and it is general to provide a constant-temperature bath that maintains, at a constant temperature, a reaction container in which the sample and the reagent react with each other. Constant-temperature water is stored in the constant-temperature bath, and a temperature of the constant-temperature water is maintained by repeating ON and OFF of a heater for heating the constant-temperature water.

However, the ON and OFF of the heater cause a relatively large fluctuation in power consumption in the entire automatic analyzer. Therefore, a method for leveling the power consumption in the automatic analyzer is considered. For example, PTL 1 discloses a technique for reducing a maximum value of power consumption by preventing a heater of an automatic analyzer and a refrigerator from being turned on at the same timing.

### Citation List

### Patent Literature

PTL 1: JP2003-83978A

### Summary of Invention

### Technical Problem

In recent years, there has been a demand for "IEC60601-1-2: 2014", which is a standard for medical electrical devices including an automatic analyzer, to be compatible with restrictions on voltage fluctuation and flicker (basic standard: IEC61000-3-3, IEC61000-4-15). The technique disclosed in PTL 1 is effective in reducing a magnitude of a voltage fluctuation occurring in the automatic analyzer, but may not conform to the above standard depending on a frequency of a fluctuation of power consumption caused by turning on and off a heater (specifically, when the fluctuation of the power consumption is around 8 Hz to 10 Hz).

An object of the invention is to provide an automatic analyzer that prevents flicker and conforms to standards of medical electrical devices.

### Solution to Problem

In order to achieve the above object, the invention provides an automatic analyzer. The automatic analyzer includes a constant-temperature bath configured to store constant-temperature water that maintains a mixed liquid of a specimen and a reagent in a reaction container at a predetermined temperature, a heater configured to heat the constant-temperature water, and a control unit configured to control the heater. a and b have fixed lengths and a < b, where a (ms) is a pulse width of an ON signal that is a control signal for turning the heater ON, and b (ms) is a pulse width of an OFF signal that is a control signal for turning the heater OFF.

### Advantageous Effects of Invention

According to the invention, it is possible to provide an automatic analyzer that prevents flicker and conforms to standards of medical electrical devices.

### Brief Description of Drawings

[FIG. 1] FIG. 1 is a perspective view showing a schematic configuration of an automatic analyzer according to Embodiment 1.
[FIG. 2] FIG. 2 is a block diagram of a temperature control system.
[FIG. 3] FIG. 3 is a diagram showing output timings of control signals for turning a heater ON/OFF.
[FIG. 4] FIG. 4 is a diagram showing a relationship between control signals for the heater and actual ON/OFF of the heater.
[FIG. 5] FIG. 5 is a diagram showing, as Comparative Example 1, an actual ON/OFF state of the heater when a pulse width of an ON signal is 10 ms or more.
[FIG. 6] FIG. 6 is a diagram showing, as Comparative Example 2, an actual ON/OFF state of the heater when a pulse width of an OFF signal is 10 ms or less.
[FIG. 7] FIG. 7 is a perspective view showing a schematic configuration of an automatic analyzer according to Embodiment 2.
[FIG. 8] FIG. 8 is a schematic configuration diagram of a temperature control system in Embodiment 2.
[FIG. 9] FIG. 9 is a diagram showing output timings of control signals for turning the heater and a load ON/OFF in Embodiment 2.
[FIG. 10] FIG. 10 is a diagram showing output timings of control signals for turning the heater and a refrigerator ON/OFF in Embodiment 3.
[FIG. 11] FIG. 11 is a diagram showing output timings of control signals for turning the heater and the refrigerator ON/OFF in Embodiment 4.

### Description of Embodiments

Hereinafter, embodiments of the invention will be described with reference to the drawings.

### Embodiment 1

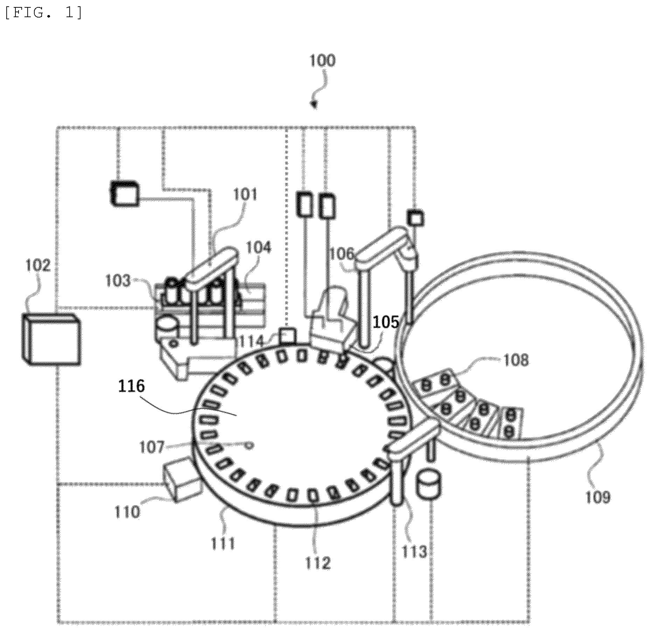

First, a basic configuration of an automatic analyzer will be described with reference to FIG. 1. FIG. 1 is a perspective view showing a schematic configuration of an automatic analyzer according to Embodiment 1. An automatic analyzer 100 is a device that measures a liquid in which a sample such as blood or urine of a patient and a reagent are mixed, and mainly includes a sample conveyance mechanism 104, a sample dispensing mechanism 101, a reagent dispensing mechanism 106, a constant-temperature bath 111, a heater 114, a refrigerator 109, a stirring mechanism 113, a measurement unit (a light source 107, a spectrophotometer 110, and the like), a cleaning mechanism 105, and a controller 102 as shown in FIG. 1.

The sample conveyance mechanism 104 conveys a rack 103 mounted with a sample container such as a blood collection tube for accommodating a sample to be analyzed to a sample dispensing (suction) position. The sample dispensing mechanism 101 dispenses a sample in the sample container into a reaction container 112 at a sample discharge position. The reagent dispensing mechanism 106 dispenses a reagent in a reagent container 108 (reagent bottle) into the reaction container 112 at a reagent discharge position. The constant-temperature bath 111 stores constant-temperature water, and in which the reaction container 112 mounted on a reaction disk 116 is immersed in the constant-temperature water. The reaction container 112 stores a mixed liquid of a sample and a reagent, and a temperature of the mixed liquid is controlled to be maintained at a target temperature by the constant-temperature water in the constant-temperature bath 111, so that a chemical reaction between the sample and the reagent is promoted. The heater 114 heats the constant-temperature water in the constant-temperature bath 111. The refrigerator 109 has a rotatable reagent disk therein, and cools the reagent contained in the reagent container 108 provided on the reagent disk. The stirring mechanism 113 stirs the sample and the reagent that are dispensed into the reaction container 112. The measurement unit includes the light source 107 and the spectrophotometer 110, and measures absorbance and the like of the mixed liquid (reaction liquid) in the reaction container 112. The cleaning mechanism 105 cleans the reaction container by discharging and suctioning a cleaning liquid in the reaction container 112 at a cleaning position. The controller 102 controls an operation of each mechanism and executes analysis processing and the like based on a measurement result of the measurement unit.

Sample analysis processing executed by the automatic analyzer is generally executed in the following order. First, when the rack 103 mounted with the sample container is loaded into a loading unit or the like, the rack 103 is loaded to a sample dispensing (suctioning) position by the sample conveyance mechanism 104. The sample in the sample container mounted on the rack 103 that arrived at the sample dispensing (suctioning) position is dispensed into the reaction container 112 in the constant-temperature bath 111 (reaction disk 116) by the sample dispensing mechanism 101. The sample is dispensed a required number of times according to an analysis item requested for the sample.

Next, the reagent dispensing mechanism 106 suctions a reagent to be used for analysis from the reagent container 108 in the refrigerator 109, and discharges the reagent to the reaction container 112 into which the sample was previously dispensed. Subsequently, the stirring mechanism 113 stirs the mixed liquid of the sample and the reagent in the reaction container 112. Thereafter, the light source 107 emits light, and the spectrophotometer 110 measures a luminous intensity of transmitted light when the emitted light passes through the reaction container 112 containing the stirred reaction liquid. Information on the luminous intensity measured by the spectrophotometer 110 is transmitted to the controller 102. Then, the controller 102 performs calculation using the received information, obtains a concentration of a predetermined component in the sample, and displays a result on a display unit or stores the result in a storage unit.

Hereinafter, a method for controlling the heater 114 that heats the constant-temperature water in the constant-temperature bath 111 will be specifically described.

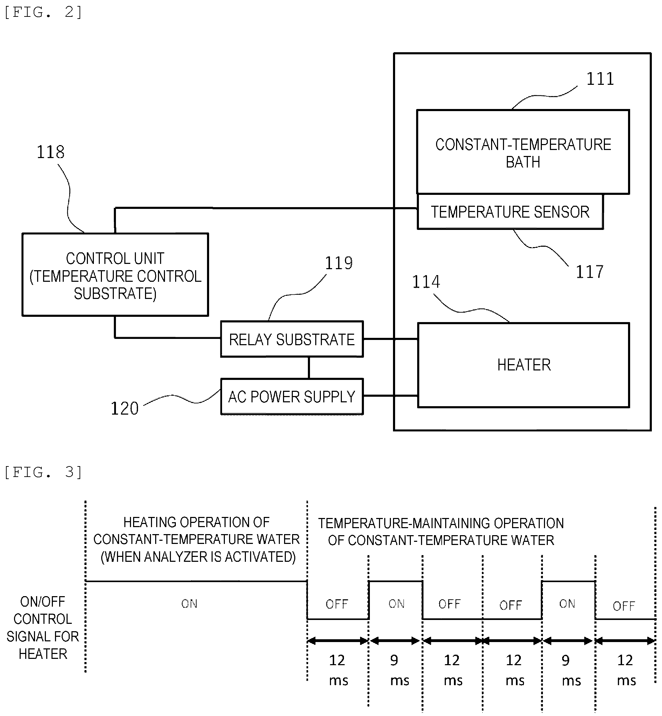

FIG. 2 is a block diagram showing a temperature control system. As shown in FIG. 2, the constant-temperature bath 111 is provided with a temperature sensor 117 such as a thermistor, and the temperature of the thermostatic water is fed back to a control unit 118 (temperature control board). The control unit 118 outputs a control signal for switching ON and OFF of the heater 114 at a predetermined timing based on a measured value of the temperature sensor 117. A relay substrate 119 switches between energization and non-energization between an AC power supply 120 (commercial power supply) and the heater 114 based on a control signal transmitted by the control unit 118. That is, the control unit 118 can maintain the constant-temperature water in the constant-temperature bath 111 at a predetermined temperature, for example, 37.0°C ± 0.1°C by appropriately switching ON and OFF of the heater 114.

FIG. 3 is a diagram showing output timings of control signals for turning the heater on and off. When the automatic analyzer is started, the control unit 118 outputs only a control signal for turning on the heater 114 (hereinafter, simply referred to as an "ON signal") to continuously turn on the heater 114 for the purpose of quickly heating the constant-temperature water to a predetermined temperature. After the temperature of the constant-temperature water rises to the predetermined temperature, the control unit 118 maintains the temperature of the constant-temperature water by changing the number of pulses of the ON signal included in a certain time according to a degree of temperature decrease of the constant-temperature water.

As shown in FIG. 3, during a temperature maintaining operation of the constant-temperature water, the control unit 118 does not continuously output the ON signal after outputting the ON signal once, and outputs a control signal for turning off the heater 114 (hereinafter, simply referred to as an "OFF signal"). However, even when the ON signal is not continuously output, if a pulse width of the ON signal is long, the heater 114 may be continuously turned on. When the heater 114 is continuously turned on, a switching period of ON and OFF states of the heater 114 becomes long, and a frequency may decrease to around 8 Hz to 10 Hz. As a result, a fluctuation of power consumption in the heater 114 becomes a factor that causes flicker, and may not be able to conform to items (hereinafter, simply referred to as "IEC standards") related to voltage fluctuation and flicker restriction (basic standard: IEC61000-3-3, IEC61000-4-15) in the standard "IEC60601-1-2: 2014" for medical electrical devices. Therefore, in the present embodiment, a and b have fixed lengths and a < b (a = 9, b = 12 in the example of FIG. 3), where a (ms) is a pulse width of an ON signal, and b (ms) is a pulse width of an OFF signal.

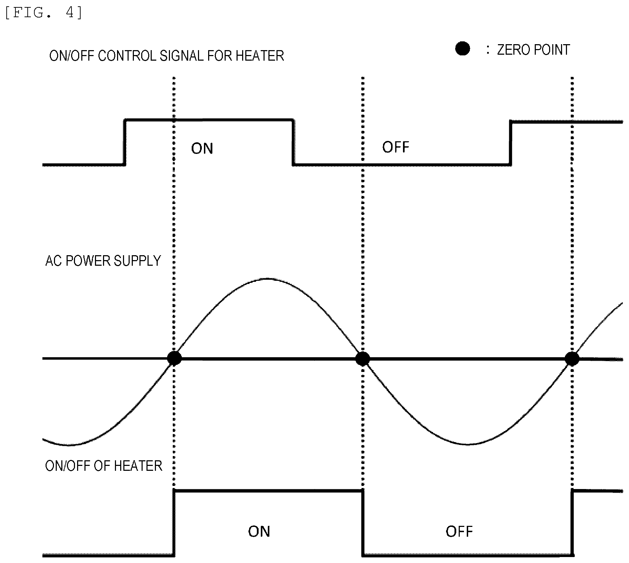

FIG. 4 is a diagram showing a relationship between control signals for the heater and actual ON and OFF of the heater. Here, the relay substrate 119 of the present embodiment has a zero-cross function of switching supply of an AC voltage from the AC power supply 120 at a timing of a zero-cross point. Therefore, when a frequency of the AC power supply 120 is 50 Hz, since a time from a zero cross point to a zero cross point is 10 ms, ON and OFF states of the heater 114 can be switched every 10 ms at the shortest. When the ON and OFF states of the heater 114 are switched every 10 ms, a period from a first ON state to a second ON state is 20 ms, and a frequency is around 50 Hz, so that the frequency can be made away from 8 Hz to 10 Hz. That is, the pulse width of the control signal for the heater 114 is preferably around 10 ms.

Next, the reason why the pulse width of the ON signal is shorter than 10 ms and the pulse width of the OFF signal is longer than 10 ms when the AC power supply 120 is 50 Hz will be described with reference to Comparative Examples 1 and 2.

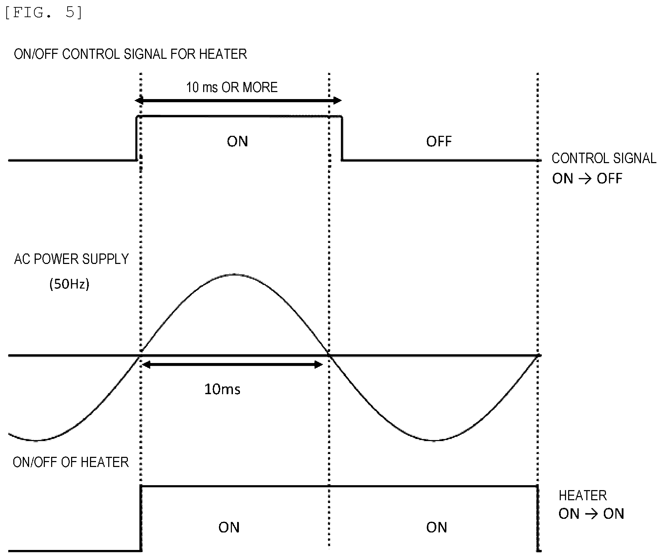

FIG. 5 is a diagram showing, as Comparative Example 1, actual ON and OFF states of the heater when the pulse width of the ON signal is 10 ms or more. As shown in FIG. 5, when the pulse width of the ON signal is increased to 10 ms or more, two phases of the zero cross point of the AC power supply 120 may be included between a rising edge and a falling edge of the ON signal. In such a case, even when the control signal instructs ON → OFF, the actual ON and OFF states of the heater 114 become ON → ON. When the heater 114 is continuously turned on, a switching period of the ON and OFF states of the heater 114 becomes long, and a frequency approaches 8 Hz to 10 Hz, which may not conform to the IEC standard. Therefore, the pulse width of the ON signal is preferably shorter than 10 ms.

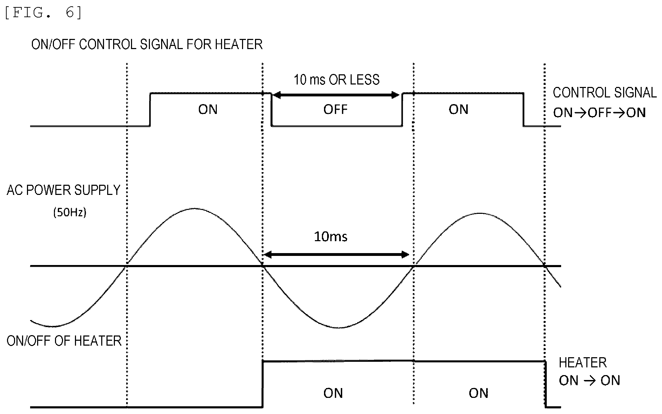

FIG. 6 is a diagram showing, as Comparative Example 2, actual ON and OFF states of the heater when the pulse width of the OFF signal is 10 mm or less. As shown in FIG. 6, when the pulse width of the OFF signal is shortened to 10 mm or less, a phase of the zero cross point of the AC power supply 120 may not be included between a rising edge and a falling edge of the OFF signal. In such a case, even when the control signal instructs OFF → ON, the actual ON and OFF states of the heater 114 become ON → ON. When the heater 114 is continuously turned on, a switching period of the ON and OFF states of the heater 114 becomes long, and a frequency approaches 8 Hz to 10 Hz, which may not conform to the IEC standard. Therefore, the pulse width of the OFF signal is preferably longer than 10 ms.

Although the above description is made based on an assumption that the frequency of the AC power supply is 50 Hz, the same concept can be applied to a case where the frequency of the AC power supply is 60 Hz. That is, when the frequency of the AC power supply is 60 Hz, since a period from a zero cross point to a zero cross point is 8.3 ms, it is desirable that the pulse width of the ON signal is shorter than 8.3 ms and the pulse width of the OFF signal is longer than 8.3 ms. In general, it is desirable that a < 500/S and 500/S < b, where a (ms) is the pulse width of the ON signal, b(ms) is the pulse width of the OFF signal, and S (Hz) is a frequency of the AC power supply.

Here, when the heater 114 is not continuously turned on, it is possible to prevent an excessive increase in the temperature of the constant-temperature water. On the other hand, when the pulse width of the OFF signal is increased, two phases of the zero cross point of the AC power supply 120 may be included between the rising edge and the falling edge of the OFF signal, and in this case, actually the heater is continuously turned off. However, even when the OFF signal is continuously output, the sum of a total output time of the continuous OFF signal and an output time of the ON signal is preferably less than 100 ms. Accordingly, a period from the first ON state to the second ON state is smaller than 100 ms, and a frequency is larger than 10 Hz, so that a fluctuation of power consumption in the heater 114 may conform to the IEC standard.

In the automatic analyzer according to Embodiment 1, the pulse width of the ON signal was set to 9 ms, the pulse width of the OFF signal was set to 12 ms, and a flicker test based on the IEC standard was actually performed. As a result, Plt (long-time flicker value) which is a measured value was 0.583, which was smaller than 0.65 which is a limit value of Plt in the IEC standard, and it was confirmed that the automatic analyzer can conform to the IEC standard.

### Embodiment 2

In Embodiment 1, the flicker is prevented from the viewpoint of a frequency in the fluctuation of power consumption, but in Embodiment 2, the flicker is prevented from the viewpoint of a magnitude (fluctuation amount) in the fluctuation of power consumption.

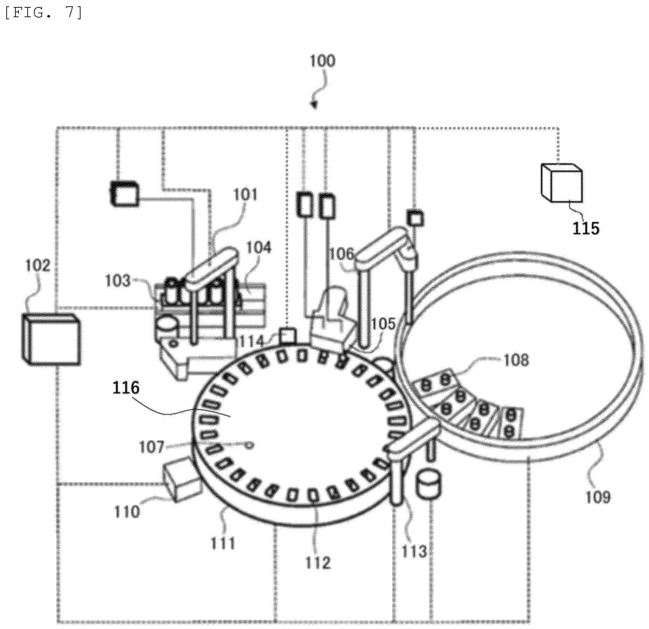

FIG. 7 is a perspective view showing a schematic configuration of an automatic analyzer according to Embodiment 2. As illustrated in FIG. 7, different from the automatic analyzer according to Embodiment 1 illustrated in FIG. 1, the automatic analyzer according to Embodiment 2 further includes a load 115 that consumes power. An example of the load 115 is a resistor that converts electric power into heat.

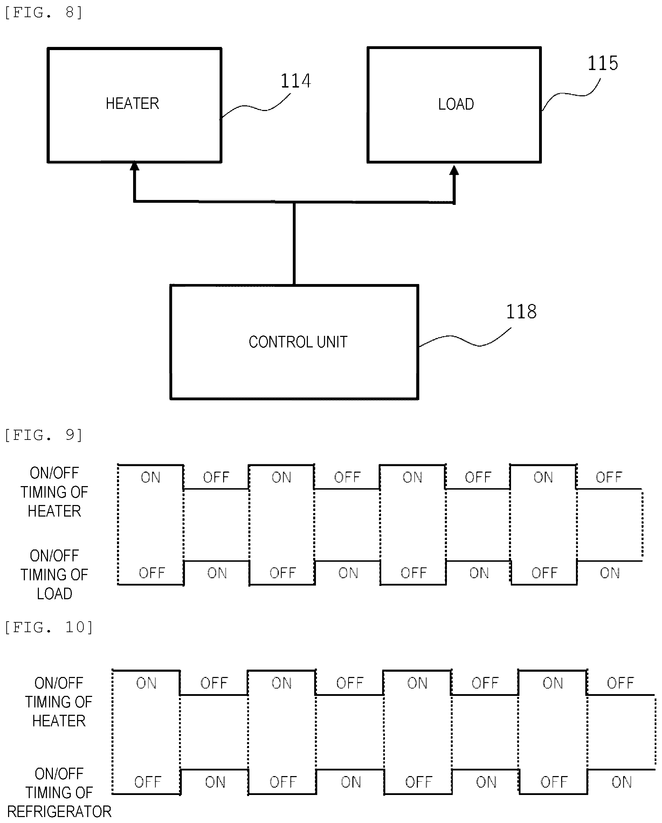

FIG. 8 is a schematic configuration diagram showing a temperature control system according to Embodiment 2. As illustrated in FIG. 8, the heater 114 and the load 115 are controlled by the common control unit 118. When the heater 114 is switched to the OFF state, the control unit 118 outputs a control signal to the load 115 to turn on the load 115 for a certain time. Since the load 115 is provided at a location different from the constant-temperature bath 111 as illustrated in FIG. 7, the temperature of the constant-temperature water is not affected even when the load 115 is turned on.

FIG. 9 is a diagram showing output timings of control signals for turning the heater and the load on and off in Embodiment 2. As illustrated in FIG. 9, the load 115 is turned off when the heater 114 is turned on, and the load 115 is turned on when the heater 114 is turned off in Embodiment 2. In this manner, by controlling the ON and OFF timings of the heater 114 and the load 115 in reverse phases, the fluctuation of power consumption of the entire automatic analyzer 100 is prevented.

When a flicker test based on the IEC standard was actually performed in the automatic analyzer according to Embodiment 2, Plt was 0.95. Since Plt was 1.27 when the load 115 was not used, it was confirmed that Embodiment 2 had an effect of improving Plt. Therefore, in a case where Plt is not smaller than the limit value according to Embodiment 1 only, such as a case where a capacity of the heater 114 is large, Plt can be made smaller than the limit value by combining Embodiment 1 and Embodiment 2.

### Embodiment 3

Although Embodiment 3 also prevents flicker from the viewpoint of a magnitude (fluctuation amount) of fluctuation in power consumption, a heat pump cooling unit of the refrigerator 109 is assumed as a load that consumes power in Embodiment 3. The heat pump cooling unit includes a condenser, a radiator, a compressor, a fan, and the like through which a refrigerant circulates, and supplies cold air into the refrigerator 109.

FIG. 10 is a diagram showing output timings of control signals for turning the heater and the refrigerator on and off in Embodiment 3. As illustrated in FIG. 10, when the heater 114 is turned on, the refrigerator 109 (for example, the compressor of the heat pump cooling unit) is turned off, and when the heater 114 is turned off, the refrigerator 109 is turned on in Embodiment 3. In this manner, by controlling the ON and OFF timings of the heater 114 and the refrigerator 109 in reverse phases, the fluctuation of power consumption of the entire automatic analyzer 100 is prevented. There is also an advantage that power consumption for preventing flicker can be effectively used for cooling in the refrigerator 109.

### Embodiment 4

In Embodiments 2 and 3, since the ON and OFF timings of the heater and the load are reverse in phase, a switching period of the ON and OFF states needs to be the same between the heater and the load. On the other hand, Plt can be improved even when the switching period of the ON and OFF states is different between the heater and the load (refrigerator) in Embodiment 4.

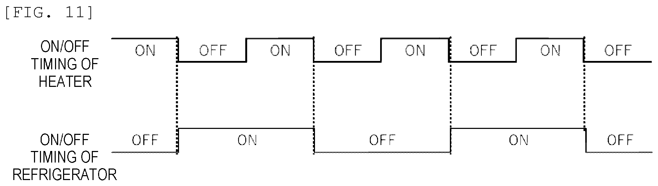

FIG. 11 is a diagram showing output timings of control signals for turning the heater and the refrigerator on and off in Embodiment 4. In Embodiment 4, the switching period of the refrigerator (load) is twice the switching period of the heater as shown in FIG. 11. However, a timing when the load (refrigerator) is turned on from off is set in a manner of not overlapping a timing when the heater is turned on from off. Therefore, an effect of preventing a fluctuation of power consumption of the entire automatic analyzer 100 to a certain extent is obtained.

The above-described Embodiment 1 to Embodiment 3 have been described in detail to facilitate understanding of the invention, and the invention is not necessarily limited to those including all the configurations described above. Further, a part of a configuration of a certain embodiment can also be replaced with a configuration of another embodiment, and a configuration of another embodiment can also be added to a configuration of a certain embodiment. It is possible to add, delete, or replace a part of configurations of each embodiment with other configurations.

### Reference Signs List

- 100:: automatic analyzer
- 101:: sample dispensing mechanism
- 102:: controller
- 103:: rack
- 104:: sample transport mechanism
- 105:: cleaning mechanism
- 106:: reagent dispensing mechanism
- 107:: light source
- 108:: reagent container
- 109:: refrigerator
- 110:: spectrophotometer
- 111:: constant-temperature bath
- 112:: reaction container
- 113:: stirring mechanism
- 114:: heater
- 115:: load
- 116:: reaction disk

## Claims

1. An automatic analyzer comprising:
a constant-temperature bath configured to store constant-temperature water that maintains a mixed liquid of a specimen and a reagent in a reaction container at a predetermined temperature;
a heater configured to heat the constant-temperature water; and
a control unit configured to control the heater, wherein
a and b have fixed lengths and a < b, where a (ms) is a pulse width of an ON signal that is a control signal for turning the heater ON, and b (ms) is a pulse width of an OFF signal that is a control signal for turning the heater OFF.

2. The automatic analyzer according to claim 1, wherein
the control unit changes the number of the ON signals within a certain time period according to a temperature of the constant-temperature water.

3. The automatic analyzer according to claim 2, wherein
after outputting the ON signal, the control unit does not continuously output the ON signal, but outputs the OFF signal.

4. The automatic analyzer according to claim 3, wherein
when the OFF signals are output continuously, a sum of a total output time of the continuous OFF signals and an output time of the ON signal is less than 100 (ms).

5. The automatic analyzer according to claim 1, further comprising:
a relay substrate configured to switch between energization and non-energization of an AC power supply and the heater, wherein
the relay substrate has a zero-cross function of switching AC voltage supply from the AC power supply at a timing of a zero-cross point.

6. The automatic analyzer according to claim 5, wherein
a < 500/S and 500/S < b, where S (Hz) is a frequency of the AC power supply.

7. The automatic analyzer according to claim 1, further comprising:
a load that consumes power, wherein
the load is OFF when the heater is ON, and the load is ON when the heater is OFF.

8. The automatic analyzer according to claim 1, further comprising:
a load that consumes power, wherein
a timing at which the load is turned from OFF to ON does not overlap with a timing at which the heater is turned from OFF to ON.

9. The automatic analyzer according to claim 7 or 8, wherein
the load is a cooling unit of a refrigerator that keeps a reagent cool.
